**Europäisches Patentamt**

**European Patent Office**

**Office européen des brevets**

(19)

(11) Veröffentlichungsnummer : **0 152 903**
**B1**

(12) **EUROPÄISCHE PATENTSCHRIFT**

(45) Veröffentlichungstag der Patentschrift :
20.09.89

(21) Anmeldenummer : 85101523.0

(22) Anmeldetag : 13.02.85

(51) Int. Cl.⁴ : **B 01 D 13/00**, B 01 D 29/34

(54) Filtervorrichtung in Segmentbauweise.

(30) Priorität : 13.02.84 DE 8404256 U
16.02.84 DE 8404709 U
28.01.85 DE 8502177 U

(43) Veröffentlichungstag der Anmeldung :
28.08.85 Patentblatt 85/35

(45) Bekanntmachung des Hinweises auf die Patenterteilung : 20.09.89 Patentblatt 89/38

(84) Benannte Vertragsstaaten :
AT BE CH DE FR GB IT LI LU NL

(56) Entgegenhaltungen :
DD-B- 114 205
DE-A- 2 752 792
DE-B- 1 461 474
DE-B- 2 802 780
DE-C- 944 065
US-A- 3 398 833

(73) Patentinhaber : Kemmelmeyer, Werner H.
Veilchenstrasse 5
D-8201 Thansau (DE)

(72) Erfinder : Kemmelmeyer, Werner H.
Veilchenstrasse 5
D-8201 Thansau (DE)

(74) Vertreter : Neidl-Stippler, Cornelia, Dr. et al
Rauchstrasse 2
D-8000 München 80 (DE)

EP 0 152 903 B1

## Beschreibung

Die Erfindung betrifft eine Filtervorrichtung mit aufgereihten, im wessentlichen zylinderförmigen, radial abwechselnd von außen oder innen anströmbaren Elementen und zwischen jeweils zwei dieser Elemente angeordnetem ringförmigem Filtermaterial.

Derartige Filtervorrichtungen werden zur Filtrierung von Gasen, Flüssigkeiten und anderen Filtriermedien, vorzugsweise für verfahrenstechnische Anlagen, wie in der Lebensmittel- und Getränkeindustrie, der Druckluftaubereitung, insbesondere im Sterilbetrieb, auch unter Überdruckbedingungen und/oder bei hohen Temperaturen, eingesetzt.

An Filtervorrichtungen dieser Art werden sehr hohe Anforderungen gestellt. Neben einer gesicherten, vollständigen Erfüllung der geforderten Filtrierungsleistungen, muß ein zuverlässiger, störungsfreier Betrieb gewährleistet werden können, da ein Ausfall der Filtrierungsvorrichtung nicht nur zu unbrauchbaren Produkten führt, sondern mit dem Ausfall einer Filtervorrichtung in aller Regel in den betreffenden Anlagen enorme Stillstandsverluste verbunden sind.

Insbesondere bei der Herstellung von Lebensmitteln und Getränken, wie etwa in Brauereien, muß neben den zuvor angesprochenen Anforderungen häufig auch sichergestellt werden, daß die Filtrierungsmedien nach Durchgang durch die Filtervorrichtung absolut steril sind. Bei einem Ausfall der Filtervorrichtung im Sterilbetrieb, was nicht immer unmittelbar zu erkennen ist, können erhebliche Produktionsmengen unbrauchbar werden.

Insgesamt ist der Anwendungsbereich solcher Filtervorrichtungen sehr breit gefächert, neben einer Verwendung zum Ausfiltern von Brennstoffen aus Gasen, bspw. zum Abscheiden von Öl aus Druckluft (Ölabscheider), werden diese Filtervorrichtungen bspw. auch zum Entionisieren von Wasser, Entfernen von Mikroorganismen aus Getränken, aus Nährbouillons von Fermentern und dergleichen mehr verwendet. Hierbei müssen diese Filtervorrichtungen Temperaturen bis zu 200, teilweise bis zu 300 °C und Drücke im Bereich von 16 bar bis zu 20 oder sogar 30 bar aushalten. Sie dürfen auch nicht ausfallen, wenn die Auslegungsleistung, unter Umständen Kurzfristig, einmal um das doppelte oder gar dreifache überschritten wird.

Eine Filtervorrichtung der eingangs bezeichneten Art und für die vorstehend angesprochenen Anwendungsfälle ist bspw. in der DE-A 31 25 001 beschrieben. Wie dieser Druckschrift auch zu entnehmen ist, besteht eine solche Filtervorrichtung im wesentlichen aus einem röhrenförmigen, gewöhnlich senkrecht angeordneten, Filtermaterial, das in einer Innen- und Außenröhre, die bspw. siebartig ausgestaltet ist, gehalten ist. Oben und unten wird das Filtermaterial, das auch als Filterkerze bezeichnet wird, durch Abschlußdeckel gehalten. Um einen sicheren Abschluß zwischen dem Filtermaterial un den Abschlußdeckeln sicherzustellen, der einen Filterdurchschlag zuverlässig verhindern soll, ist das Filtermaterial an dem oberen und unteren Abschlußdeckel jeweils angeklebt (vgl. hierzu bspw. auch US-A 4, 157, 968). Darüber hinaus ist es auch bekannt, die Filterkerze mit den entsprechenden Deckeln zu verschweißen. Da nach einer gewissen Betriebszeit das Filtermaterial sich zusetzt und die Filtrierungsleistung nachläßt, oder jedenfalls ein unvertretbar hoher Druckabfall eintritt, muß in regelmäßigen Abständen ein Austausch vorgenommen werden. Bei der bekannten Filtervorrichtung ist nun, aufgrund der beschriebenen Verklebung bzw. Verschweißung, das gesamte Filterelement auszutauschen, einschließlich der oberen und unteren Abschlußdeckel sowie der inneren und äußeren Röhren, die das Filtermaterial abstützen, wobei diese Teile gewöhnlich aus einem hochwertigen Werkstoff, insbesondere rostfreiem Stahl, gefertigt sind. Neben einer nicht unbeträchtlichen Arbeitszeit sind mit einem solchen Austausch auch immer erhebliche Kosten verbunden, da die bei der bekannten Filtervorrichtung jeweils mit auszutauschenden Teile gewöhnlich aus einem sehr hochwertigen Werkstoff, bspw. nicht rostendem Stahl, gefertigt sind, und so im Verhältnis zu dem eigentlichen Verschleißteil, dem Filtermaterial, einen sehr hohen Wert darstellen. Gleichwohl ist für die hier in Rede stehenden Anwendungsgebiete bislang nur die Verwendung der zuvor beschriebenen, bekannten Filtervorrichtungen bekannt. Lediglich im Kraftfahrzeugbereich ist ein Luftfilter bekannt, der aus einem segmentartig aufgebauten Filterelement besteht, in dem scheibenförmiges Filtermaterial durch Distanzringe voneinander beabstandet sind (vgl. DE-C 681 303). Diese Distanzringe bestehen jeweils aus Röhrenabschnitten unterschiedlichen Durchmessers, die einmal nach innen und einmal nach außen gerichtete Stege aufweisen. Die Distanzringe sind in jeweils regelmäßig abwechselnder Sequenz übereinandergelegt, mit dazwischengeschaltetem Filtermaterial. So wird angesaugte Luft durch den Distanzring mit den nach außen gerichteten Stegen nach oben oder unten umgeleitet und in dem Bereich des Distanzringes mit den nach innen gerichteten Stegen in die Reinluftleitung gesogen, nachdem die Luft so zwangsweise das zwischengeschaltete Filtermaterial durchsetzt hat. Diese bekannte Filtervorrichtung mag zwar für eine Anwendung bei der Reinigung von Ansaugluft für Verbrennungskraftmaschinen geeignet sein, sie ist jedoch für die Anwendungsgebiete, für die die nachstehend beschriebene erfindungsgemäße Filtervorrichtung gedacht ist, nicht verwendbar. Durch die Distanzringe wird im wesentlichen nur eine Beabstandung des Filtermaterials bewirkt, kann aber keine ausreichende Abdichtung des Filtermaterials erzielt werden, die eine Verwendung derartiger Filtervorrichtungen beispielsweise auch im Sterilbetrieb ermöglichen würde. In der übereinander-geschalteten Sequenz swischen den Distanzrin-gen sind jeweils außen und innen viertelkreisförmige Bereiche vorhanden, in denen das Filtermaterial nur einseitig auf einem Distanzring aufliegt, aber nicht abdichtend gehaltert wird. Hier Können ohne weiteres « Bypässe » bzw. Filterdurchbrüche auftreten, insbesondere auch wenn, was bei diesen Filtervorrichtungen nicht vorgesehen ist, das Filtrierungsmedium etwa eine Flüssigkeit wäre. Tatsächlich ist eine derartige Filtervorrichtung bislang auch nur als Luftfilter für Verbrennungskraftmaschinen bekannt geworden.

Aus der DE-C 944 065 ist nun eine gattungsgemäße Filtervorrichtung bekannt geworden, bei der grobporige Filtermaterialscheiben mit feinpo-rigen Filtermaterialscheiben abwechselnd auf ei-nem Innenrohr aufgereiht sind ; wobei die grob-porigen Filtermaterialscheiben abwechselnd in-nen oder außen derart abgedichtet sind, daß sie radial jeweils nur von innen oder außen anströmbar sind. Die durchlässigeren Scheiben sind dabei aus naßfesten Filterkartons oder metallischem oder Keramischem Sintermaterial hergestellt, während die feinporigen Filterscheiben beispielsweise aus Sieben oder auch aus faserigem Material, wie Cellulose, Asbest und sofort bestehen.

Diese Filterkerze ist nicht für den Betrieb mit hohen Durchflußmengen oder auch mit hohen Drücken ausgelegt.

Die einzelnen Elemente sind nur bedingt regenerierbar und ermöglichen aufgrund der gewählten Materialien keinen preiswerten Ersatz bzw. leichte Austauschbarkeit. Die bekannte Vorrichtung ist auchnicht auf Wiederverwendbarkeit bzw. Regnerierbarkeit ausgelegt, sondern ermöglicht lediglich einen einmaligen Betrieb.

Demgegenüber ist es Aufgabe der Erfindung, eine Filtervorrichtung anzugeben, die ohne eine Einschränkung im Verwendungsbereich das Arbeiten bei hohen Drucken ermöglicht und eine größere Wartungsfreundlichkeit und Regenerierbarkeit bei zumindest gleicher Betriebssicherheit und Filtrierungsleistung aufweist.

Die Aufgabe wird durch eine gattungsgemäße Filtervorrichtung gelöst, wobei die Elemente im wesentlichen hohlzylinderförmig sind, zwei radial voneinander distanzierte Wände, sowie eine obere bzw. eine untere Stirnfläche aufweisen, und an ihren Stirnflächen und entweder an ihrer radialen Außenwand oder Innenwand Öffnungen aufweisen, wobei eine Flüssigkeitsleitung von der axialen Innenleitung des Filters durch Öffnungen in der Innenwand der radial von innen anströmbaren hohlzylinderförmigen Elemente und durch die stirnseitigen Öffnungen dieser Elemente durch das ringförmige Filtermaterial und durch die stirnseitigen Öffnungen in das nächste, von außen anströmbare hohlzylinderförmige Element über/in dessen Außenwand angeordnete Öffnungen nach Außen und in Strömungsumkehr eine Flüssigkeitsleitung von Außen zur Innenleitung herstellbar ist.

Bei einer bevorzugten Ausgestaltung der Erfindung wirkt das Filtermaterial an seinem gesamten Randbereich abdichtend mit den Elementen oder Segmenten zusammen. Erfindungsgemäß ist erkannt worden, daß die oben erwähnte, aus dem Kraftfahrzeugbereich bekannte, sich durch einen segmentartigen Aufbau auszeichnende Filtervorrichtung grundsätzlich auch für die hier in Rede stehenden Anwendungsbereiche geeignet ist. Durch die Lehre, das Filtermaterial in seinem gesamten Randbereich mit oder gegenüber den hohlzylinderförmigen Elementen abzudichten, ist es möglich, einer gattungsgemäßen Filtervorrichtung den Anwendungsbereich zur erschließen, für den bislang nur Filtervorrichtungen mit Filterkerzen bekannt sind. In Ausgestaltung der oben angegebenen Lehre lehrt die Erfindung weiter, daß jedes Element oder Segment mindestens eine Einströmöffnung oder mindestens eine Aus-strömöffnung aufweist, wobei diese in der Innenwand oder in der Außenwand gebildet ist. Ent-sprechend der bekannten « Kerzen »-Filtervor-richtung wird auch die erfindungsgemäße Filtervorrichtung von imen angeströmt, wobei dann das « Rein »-Medium im Reinmediumraum der Filtervorrichtung, deren im wesentlichen doppelröhriger Aufbau beibehalten ist, abgezogen wird. Bei umgekehrter Strömungsrichtung, strömt das Filtrierungsmedium von außen nach innen. Mit Bezug auf die zunächst beschriebene Strömungsrichtung soll hier mit Innenwand der Abschlußbereich des Filterelementes nach innen bezeichnet sein, also bei dem bekannten doppelröhrigen Aufbau der der Innenröhre entsprechende Bereich. Desgleichen soll unter Außenwand der mit der Röhre größeren Durchmessers übereinstimmende Bereich bezeichnet sein. Die Einströmöffnung in der Außenwand bzw. die Auströmöffnung in der Innenwand führt dazu, daß jeweils eine definierte « Kammer » geschaffen ist, in die einmal das Filtrierungsmedium von innen einströmt, umgelenkt wird und dann ein darüber oder darunter befindliches Filtermedium durchsetzt. Eine so gebildete Kammer, die im übrigen über den Umfang verteilt vier Ausströmöffnungen oder Einströmöffnungen aufweisen kann, verfügt oben und unten über innere und äußere durchgängige Dichtränder oder Dichtleisten, gegen die die Elemente etwa dichtend anpreßbar sind, womit eine Umgehung des Filters ausgeschlossen ist.

In weiterer Ausgestaltung lehrt die Erfindung darüber hinaus, daß in Strömungsrichtung dem Filtermaterial zumindest ein Siebkörper od. dgl. vorgeschaltet ist. Diese Vorschaltung des Siebkörpers kann grundsätzlich dadurch realisiert sein, daß der Siebkörper mit dem Filtermaterial einstückig ausgebaut ist. In besonderen Fällen kann aber auch das Filtermaterial als solches schon ausreichen, ein Siebkörper also nicht notwendig sein.

Wenn auch zur Abhaltung bzw. Ausfilterung von Grobbestandteilen vor dem Filtermaterial grundsätzlich ein Siebkörper, der in Strömungsrichtung vor dem Filtermaterial angeordnet ist, ausreicht, kann es darüber hinaus aber auch noch zweckmäßig sein, daß dem Filtermaterial ein Siebkörper nachgeschaltet ist. Die Filtervorrichtung wird damit universeller verwendbar, da unabhängig von der Strömungsrichtung dem Filtermaterial jeweils ein Siebkörper vorgeschaltet ist. Desgleichen wird durch eine solche Anordnung auch verhindert, daß dann, wenn das Filtermaterial einmal reißen sollte, was ein höchst seltener Fall ist, aber doch nicht immer mit vollständiger Sicherheit auszuschließen ist, etwa wenn durch eine Störung in der Anlage extreme Bedingungen auf die Filtervorrichtung einwirken, kein Filtermaterial auf die « reine » Seite gelangen kann, da es durch das noch in Strömungsrichtung hinter dem Filtermaterial vorgesehene Sieb zuverlässig zurückgehalten wird.

Das Element einer erfindungsgemäßen Filtervorrichtung kann grundsätzlich einstückig ausgebildet sein, jedenfalls solange, wie nur ein Siebkörper vorgesehen ist. Fertigungsmäßig empfiehlt es sich aber, das Element in Form eines Innen- und eines Außenringes herzustellen, die durch den Siebkörper miteinander verbunden sind. Der Siebkörper kann hierzu an seinem Innen- und seinem Außenrand mit dem Innen- und Außenring verschweißt oder verklebt sein. Besonders dann, wenn vor und hinter dem Filtermaterial ein Siebkörper angeordnet sein soll, empfiehlt es sich, den Siebkörper lösbar mit dem Innen- und dem Außenring zu verbinden, etwa durch eine Verschraubung. Auch könnte sich bspw. eine Einklemmung durch Klemmschrauben empfehlen.

Eine besondere Ausgestaltung der Lehre der Erfindung geht jedoch dahin, einen Siebkörper in dem Außenring rastbar zu haltern. Der Siebkörper, der gewöhnlich ein dehnungsfähiger Stahlkörper ist wird gemäß dieser Ausgestaltung der Lehre in eine Rastnut in dem Außenring eingedrückt und liegt dann auf einer entsprechenden Fläche oder etwa einem entsprechenden umlaufenden Absatz des Innenringes auf. Bei zwei Siebkörpern, die in dem Außenring mit Abstand zueinander parallel geklemmt sind, ist es so möglich, den Innenring allein durch Formschluß zu haltern. Bevorzugt ist der Klemmabstand der Siebkörper dann in dem Außenring ein Klein wenig geringer als in dem Innenring bzw. als der Abstand der umlaufenden Absätze des Innenrings, wodurch die Siebkörper gleichzeitig mit Druck auf dem Innenring aufliegen. Eine derartige Ausgestaltung erbringt zum einen eine sehr einfache Montierbarkeit der Vorrichtung, da eine zusätzliche Bearbeitung Sinne eines Schweißens, Klebens oder Verschraubens entfällt. Darüber hinaus ergibt dies aber zwischen dem Innenring und dem Außenring eine gewisse Elastizität und Verschiebbarkeit relativ zueinander, ohne daß die Gefahr besteht, daß die Verbindungsstellen, etwa Schweißpunkte, aufbrechen. Diese Elastizität ist von großer Bedeutung für einen zuverlässig dichtenden Abschluß zwischen den Elementen und den dazwischengeschalteten Filtermaterialien, wie weiter unten noch im einzelnen ausgeführt ist.

Darüber hinaus ist bevorzugt vorgesehen, daß das Filtermaterial mit Abstand zu den Siebkörpern anordbar ist. Das Filtermaterial kann so in einem begrenzten Umfang « arbeiten », hat etwa Raum für mit den Temperaturschwankungen verbundene Ausdehnungen.

Von ganz entscheidender Bedeutung für die Dichtigkeit der Filtervorrichtung, das dichtende Zusammenwirken der Elemente mit dem Filtermaterial, ist es, daß bei allen Elementen, allen Innen- und Außenringen der Elemente, jeweils der notwendige Druck zwischen benachbarten Elementen herrscht, um die dichtende Pressung des Filtermaterials sicherzustellen. Insbesondere wenn relativ dünnes Filtermaterial verwendet wird, das zudem noch relativ wenig dehnungsfähig ist, kann durch Setzungserscheinungen der Druck zwischen Außen- oder Innen- ringen der Elemente entscheidend nachlassen. Um hier eine Abhilfe zu schaffen, lehrt die Erfindung weiter, daß zumindest ein Element, vorzugsweise ein Endelement der Filtervorrichtung, gegen die nachfolgenden Elemente über einen Gummiwulst, bspw. einen O-Ring oder einen Gummiwulst mit einem im oberen Bereich kreisförmigen, unten jedoch rechteckigen Querschnitt zur Einpassung in eine Nut, abgestützt ist. Wenn sich zwischen weiteren Segmenten Setzungserscheinungen ergeben, kann die Halterung der Segemente nachfolgen, wie bei einer Druckfeder, und den Druck praktisch unverändert aufrechterhalten. Soweit die Elemente, wie zuvor gelehrt, aus Innen- und Außenringen bestehen, weist vorzugsweise bei dem Endelement der Innen- wie der Außenring einen derartigen Gummiwulst auf.

Abgesehen von der Bedeutung, Setzungserscheinungen auszugleichen, kann oder können O-Ringe, bzw. Gummiwülste od. dgl., auch noch vorteilhaft sein, wenn das Filtermaterial selbst ein unelastisches Material ist, wie bspw. ein Keramikwerkstoff. Dann empfiehlt es sich, jeweils zwischen dem Filtermaterial und dem Filterelement, also den Innen- und Außenringen, derartige O-Ringe oder Gummitwülste vorzusehen.

Zum Zusammenhalt der Elemente ist es im übrigen vorteilhaft, die obere und untere Halterung der Elemente mit einem Zuganker gegeneinander zu verspannen. Der Zuganker kann bspw. eine durch die Mitte der Filtervorrichtung, zusammenfallend mit der Achse der Filtervorrichtung, geführte Langschraube sein, die die untere und obere Halterung für die Seg mente gegeneinander verspannt.

Eine erfindungsgemäße Filtervorrichtung, wie sie zuvor beschrieben ist, kann grundsätzlich mit verschiedenem Filtermaterial betrieben werden. Da die Durchflußleistungauch eine Funktion der zur Verfügung stehenden Filterfläche ist, ist es vorteilhaft, in einem gegebenen Raum möglichst viele Filtersegmente unterzubringen. Eine ökonomische Ausnutzung des Raumes wiederum wird gefördert von relativ dünnen Elementen. Um diesem Erfordernis nachzukommen lehrt die Erfindung weiterhin, in Filtervorrichtungen der hier in Rede stehenden Art, insbesondere in einer Filtervorrichtung mit einem oder mehreren der zuvor beschriebenen Merkmale, als Filtermaterial Kunststoffmembranen zu verwenden. Das Ausgangsmaterial für solche Membranen wird bspw. auch unter dem Warenzeichen GORE-TEX vertrieben.

Ein derartiges Filtermaterial besteht aus einer Membrane, die Filteraktiv ist und einem mit der Membrane verbundenen Trägermaterial. Da das Trägermaterial relativ leicht durchgängig ist, auch für auszufiltrierende Bestandteile, die eben erst in der filteraktiven Membran filtermäßig zurückgehalten werden, ist es erforderlich, diese Membranen immer in einer bestimmten Weise in eine in Rede stehende Filtervorrichtung einzulegen, nämlich so, daß das Filtrierungsmedium zunächst die filteraktive Membran durchströmt und nachfolgend das Trägermaterial. Anderenfalls könnte über das Trägermaterial ein « Kurzschluß » auftreten, d.h. praktisch ungefiltertes Filtrierungsmedium auf die « Rein »-Seite gelangen.

Eine besondere Lehre der Erfindung geht jedoch dahin, ein zumindest dreischichtiges Membranelement zu verwenden, das dementsprechend aus einer filteraktiven Membran, gefolgt von einer Trägerschicht und wiederum einer filteraktiven Membran besteht. Unabhängig von der Einbauweise kann bei der Verwendung einer solchen Membran ein « Kurzschluß » nicht auftreten.

Darüber hinaus kann es aber auch vorteilhaft sein, ein vierschichtiges Membranelement zu verwenden, das in einfacher Weise aus zwei zweischichtigen Membranelementen zusammengefügt ist, die so miteinander verbunden sind, daß jeweils die Trägerschichten aneinander angrenzen. Aus dem Ausgangsmaterial ist dann ein besonders stabiles Membranelement hergestellt.

Wie schon weiter vorne ausgeführt, ist es für eine Filtervorrichtung der hier in Rede stehenden Art von großer Bedeutung, vollständig dicht zu sein, d.h. auszuschließen, daß das Filtrierungsmedium in irgendeiner Weise die Filtervorrichtung ohne Filtrierung durchsetzt, also etwa im « Bypass » das Filtermaterial umgeht. Hierzu ist von besonderer Bedeutung, daß das Filtermaterial insbesondere bei einer Filtervorrichtung, wie sie weiter vorne beschrieben ist, dichtend zwischen den Elementen, d.h. zwischen den jeweiligen Außen- und Innenringen gehalten ist. Grundsätzlich kann dies dadurch unterstützt werden, daß die Elemente an ihrem äußeren und inneren Rand mit einer abdichtenden Einfassung umgeben werden.

Besonders bevorzugt im Rahmen der Erfindung ist es jedoch, das Element selbst durch eine geeignete Pressung oder Formung schon bei der Herstellung mit einem inneren und äußeren Randwulst auszugestalten.

Weitere Einzelheiten der Erfindung ergeben sich aus den Unteransprüchen sowie der nachfolgenden Beschreibung der lediglich Ausführungsbeispiele darstellenden beigefügten Zeichnung, auf der zeigt :

Fig. 1 eine prinzipielle Darstellung einer erfindungsgemäßen Filtervorrichtung ;

Fig. 2 zwei Elemente einer erfindungsgemäßen Filtervorrichtung sowie ein zwischengeschaltetes Membranelement, in vergrößerter Darstellung ;

Fig. 3 eine nochmals vergrößerte, halbseitige Darstellung eines erfindungsgemäßen Membranelements, im Schnitt ;

Fig. 4 eine alternative Ausführungsform eines erfindungsgemäßen Elementes ;

Fig. 5 ein weiteres alternatives Element, welches nach innen offen und zur Außenleitung geschlossen ist ;

Fig. 6 eine Draufsicht auf ein Element gemäß Fig. 4 und Fig. 5, mit Stützwänden ;

Fig. 7 ein weiteres alternatives Element, mit schlitzförmigen Öffnungen in Stirnflächen ;

Fig. 8 eine schematische Darstellung zweier übereinandergelegter Elemente, in alternativer Ausführungsform, mit dazwischenliegendem Filtermaterial und ringförmigen Dichtelementen ;

Fig. 9 eine weitere Ausführungsform eines alternativen Elementes, mit einem ringförmigen Wulst parallel zur Innen- und Außenwand auf der einen Stirnfläche und mit einer ringförmigen Vertiefung parallel zur Innen- und Außenwand auf der anderen Stirnfläche ;

Fig. 10 eine weitere alternative Ausführungsform von Elementen, wobei die einen Elemente lediglich mit wulstartigen Erhebungen ausgebildet sind, während die anderen Elemente jeweils nur mit Vertiefungen ausgebildet sind, im Schnitt ;

Fig. 11 eine weitere alternative Ausführung eines Elementes, wobei auf der jeweiligen Stirnseite des Elementes ein wulstförmiges, ringartiges Abdichtungselement und rinnenartiges Abdichtungselement angebracht ist, im Schnitt ;

Fig. 12 ein alternatives Filtermaterialpaket, in der Draufsicht ;

Fig. 13 einen Querschnitt entlang der Linie A-A in Fig. 12 ;

Fig. 14 eine weitere alternative Ausführungsform eines Filtermaterialpaketes, wobei ein Metallsieb als Filtermaterialblatt verwendet ist, geschnitten entlang der Linie A-A in Fig. 12 ;

Fig. 15 ein mehrschichtiges Filtermaterialpaket, geschnitten entlang der Linie A-A in Fig. 12 ;

Fig. 16 ein Filtermaterialpaket, bei welchem das Filtermaterial mittels Schrauben an mehrschichtigen Einfassungen befestigt ist, geschnitten entlang der Linie A-A in Fig. 12 ;

Fig. 17 eine Ausführungsform, bei welcher das Filtermaterial durch Aufbringen von Druck in zwei Einfassungen eingeklemmt ist, geschnitten entlang der Linie A-A in Fig. 12 ;

Fig. 18 eine weitere alternative Ausführungsform, bei der die Einfassung (en) den Rand des Filtermaterialpaketes nicht umfassen, geschnitten entlang der Linie A-A in Fig. 12 ;

Fig. 19 eine Draufsicht des in Fig. 18 geschnitten dargestellten Filtermaterialpaketes ; und

Fig. 20 ein Einsatz eines Filtermaterial paketes in einer Filtervorrichtung.

Dargestellt und beschrieben ist eine Filtervorrichtung 10, zur Filterung von Gasen, Flüssigkeiten od. dgl. Filtrierungsmedien in verfahrenstechnischen Anlagen, wie das im einzelnen weiter oben zu Beginn ausgeführt ist.

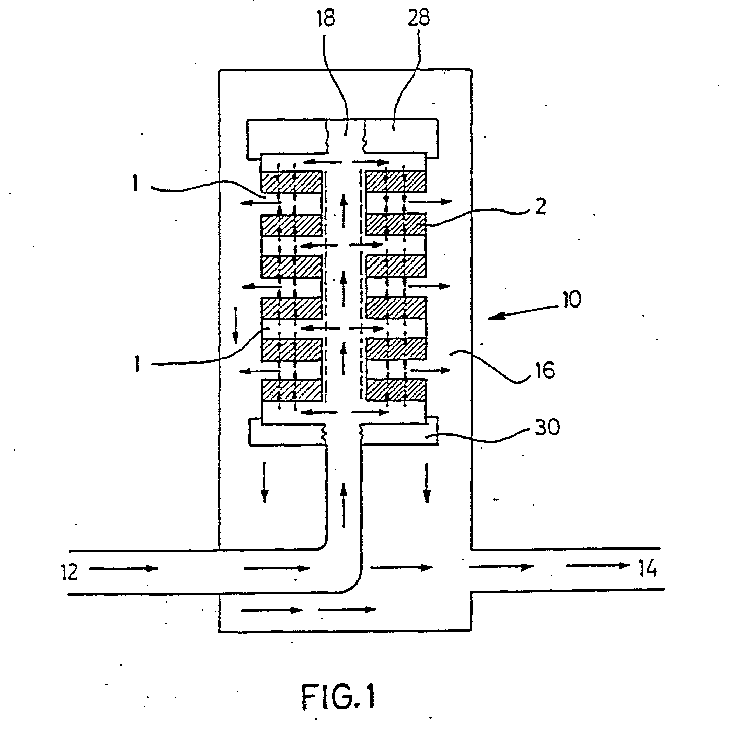

In Fig. 1 der beigefügten Zeichnung ist die Filtervorrichtung 10 prinzipmäßig dargestellt, wobei das Filtrierungsmedium durch die Zuführleitung 12 in die Filtervorrichtung 10 gelangt, dann die Elemente 1 durchsetzt und durch die Abführleitung 14 der Anlage, von der die Filtervorrichtung 10 ein Element ist, wieder zugeführt wird. Bei der in Fig. 1 dargestellten Filtervorrichtung 10 ist zur Verdeutlichung das Filtermaterial 2 stark vergrößert dargestellt. Wie zu erkennen ist, sind die Elemente 1 teilweise innen, d. h. dem Zuströmrohr 12 zu geschlossen, und weisen teilweise eine Öffnung zu dem Zuströmrohr 12 hin auf.

Das Filtrierungsmedium strömt nun in dem in Fig. 1 dargestellten Beispiel durch die Öffnungen der zu dem Zuströmrohr 12 hin offenen Elemente 1, dann, unter einer Strömungsumlenkung, im wesentlichen um 90°, durch das Filtermaterial 2, und sodann wieder unter einer Strömungsumlenkung, im wesentlichen wieder unter 90°, durch weitere Elemente 1, die nach außen, d. h. zu dem Reinmediumraum 16 hin offen sind.

Wie weiter in Fig. 1 zu erkennen sind, werden die Elemente 1 durch obere und untere Einfassungen bzw. Abdeckkappen 28 bzw. 30 gehalten.

Wenn auch zuvor davon gesprochen wurde, daß das Filtrierungsmedium von der Zufuhrleitung 12 in die jeweiligen Filterelemente 1 strömt, so ist doch genauer zu erkennen, daß die Zuführleitung 12 in eine Filterinnenleitung 18 mündet, die jedoch im körperlichen Sinne keine eigene Leitung zu sein braucht, sondern durch die jeweiligen, zu ihr hin geöffneten oder nicht hin geöffneten Elemente bildbar ist.

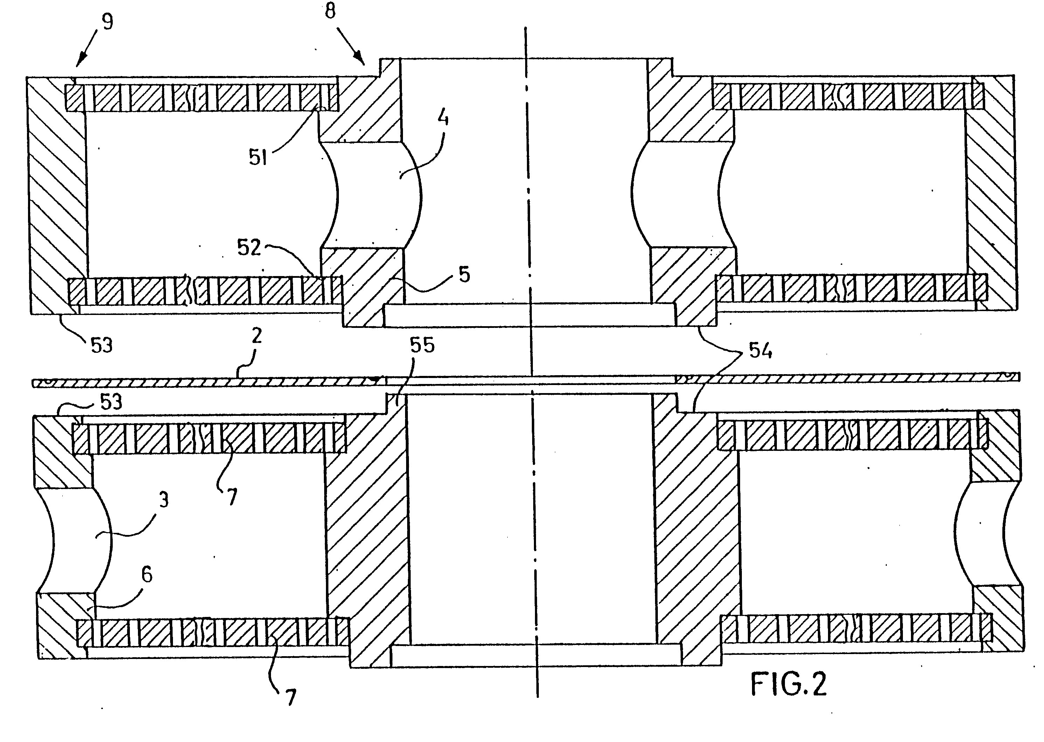

Wie genauer in Fig. 2 zu erkennen ist, ist die erfindungsgemäße Filtervorrichtung 10 segmentartig aufgebaut, nämlich durch im wesentlichen kreisringförmige Elemente 1, die aus einem Außenring 9 und einem Innenring 8 bestehen. Der Außenring 9 und der Innenring 8 werden bei dem in Fig. 2 dargestellten Ausführungsbeispiel durch Siebkörper 7 zusammengehalten, die jeweils in dem Außenring 9, wie in der Zeichnung auch zu erkennen sind, formschlüssig eingeklemmt sind. Dadurch, daß die Siebkörper 7 auf umlaufenden Absätzen 51 bzw. 52 des Innenringes 8 aufliegen, wird das Filterelement 1 insgesamt, das aus einem Außenring 9, den beiden Siebkörpern 7 und dem Innenring 8 besteht, zusammengehalten.

Wie weiter in Fig. 2 dargestellt, sind die Einströmöffnungen 4 bzw. die Ausströmöffnungen 3 bohrungsartig in dem Innenring bzw. dem Außenring 9 ausgebildet.

Damit ist erreicht, daß auf dem Außenring 9 und dem Innenring 8 umlaufende Dichtflächen 53 bzw. 54 ausgebildet werden können, auf denen das Filtermaterial 2 durchgehend aufliegt. Das Filtermaterial 2 wird so zwischen zwei Filterelementen 1, die jeweils auch an ihrer unteren Seite entsprechende Dichtflächen 53 und 54 aufweisen, vollkommen abdichtend gehalten.

In Fig. 2 sind jeweils nur zwei Ausströmöffnungen 3 bzw. Einströmöffnungen 4 zu erkennen. Vorzugsweise besitzt ein Filterelement 1 jedoch jeweils vier Ausströmöffnungen 3 bzw. Einströmöffnungen 4.

Darüber hinaus ist aus Fig. 2 auch noch zu erkennen, daß das Filtermaterial 2, das auf der Dichtfläche 53 bzw. 54 aufliegt, im zusammengebauten Zustand der Filtervorrichtung 1 mit Abstand zu den vor- und nachgeschalteten Siebkörpern 7 sich befindet, womit die schon weiter vorne angesprochenen Vorteile verbunden sind.

Nicht dargestellt ist, daß ein Endfilterelement 1 in einer weiteren bevorzugten Ausführungsform der Erfindung mit einem Gummiwulst bzw. einem O-Ring versehen sein kann, und über den dieses Filterelement 1 dann mit dem darüber oder darunter befindlichen Filterelement 1 zusammenwirkt. Wenn auch dieser Gummiwulst grundsätzlich in der Dichtfläche 53 und der Dichtfläche 54 vorgesehen sein kann, so ist es doch auch möglich, den Gummiwulst an dem Innenring 8 in der Kontaktfläche 55 auszubilden und in dem Innenring 9 in einem äußeren Bereich der Dichtfläche 53, so daß das Aufliegen des Filtermaterials 2 auf den Dichtflächen 53 und 54 nicht gestört wird. Aufgrund dieses Gummiwulstes bzw. dieses O-Ringes wird Setzungserscheinungen in der Filtervorrichtung 1 vorgebeugt, die unter Umständen dazu führen könnten, daß, durch Nachlassen der Pressung zwischen den einzelnen Filterelementen 1, Undichtigkeiten auftreten.

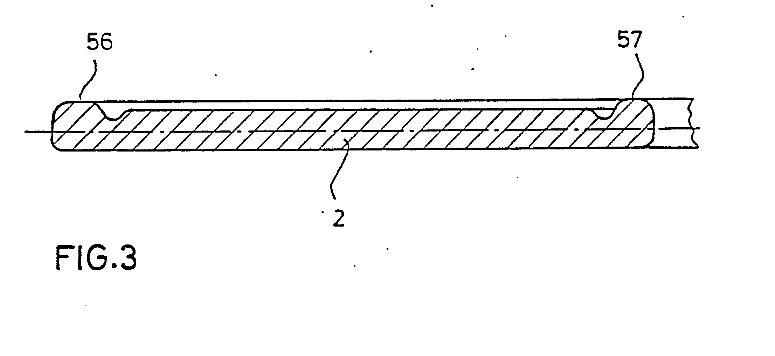

In Fig. 3 ist im Querschnitt und lediglich hälftig eine Filtermembran dargestellt, die erfindungsgemäß als Filtermaterial 2 Verwendung findet. Diese Filtermembran ist bevorzugt eine PTFE-Membran und besteht aus drei bzw. vier Schichten, von denen die mittlere oder die beiden mittleren Trägermaterialschichten sind, während die äußeren die eigentliche Filterwirkung erbringen. Im einzelnen ist dies schon weiter vorne beschrieben. Wie in Fig. 3 zu erkennen ist, weist das Filtermaterial 2 bzw. die Filtermembran einen äußeren umlaufenden Dichtwulst 56 und entsprechend einen inneren umlaufenden Dichtwulst 57 auf, deren Vorteilhaftigkeit auch schon weiter vorne beschrieben ist.

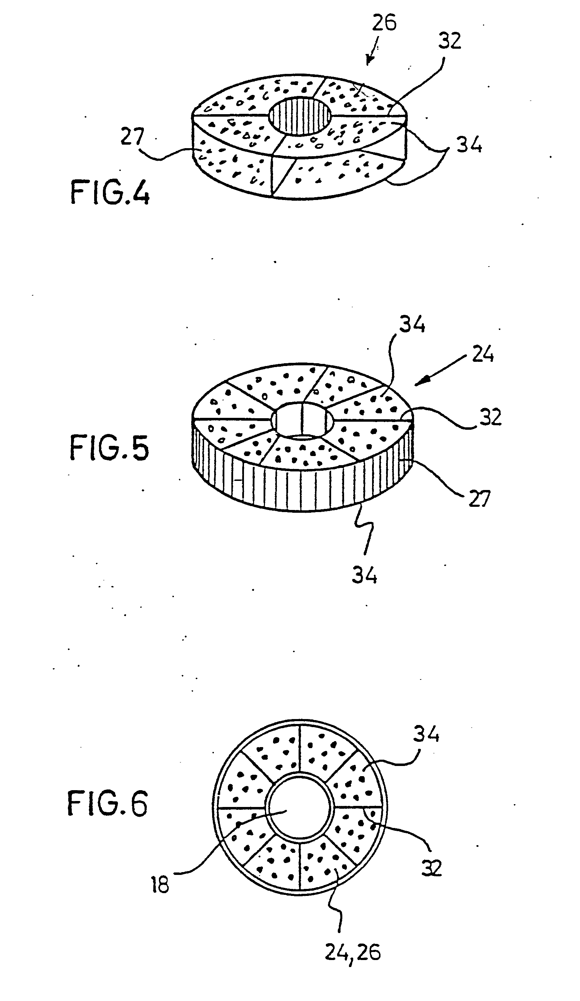

In den Fig. 4 bis 11 sind alternative Ausführungsformen der Elemente 1 dargestellt, die im folgenden auch als Filtersegmente bezeichnet werden. Wie schon aus der vorstehenden Beschreibung hervorgeht, sind für eine erfindungsgemäße Filtervorrichtung 10 zwei unterschiedliche Elemente 1 bzw. Filtersegmente 1 notwendig.

Das in Fig. 4 dargestellte Filtersegment 26 einer ersten Art ist zu dem Reinmediumraum 16 hin mit Öffnungen versehen, die eine beliebige, mit der Stabilität des Filter mentes zu vereinbarende Form besitzen können. Durch diese Öffnungen ist ein freier Austritt von gereinigtem Material, welches aus dem Filtermaterial in das nach außen offene Filtersegment durch die Öffnungen in der Stirnfläche 34 des Filterelementes 1 strömt, möglich. (Fig. 5) Die zweite Art Filtersegmente 24 ist nach innen mit Öffnungen versehen, nimmt das nicht gereinigte Material auf und leitet es durch Öffnungen in seinen Stirnflächen in das Filtermaterial 2. Da diese Filtersegmente 24 ständig den Verschmutzungen ausgesetzt sind, kann es notwendig sein, ggf. diese Elemente separat zu reinigen, oder auch zu ersetzen bzw. aus einem Material herzustellen, welches gegenüber den Verunreinigungen unempfindlich ist. Die nach außen offenen Filtersegmente 26 können dagegen weniger reinigungsanfällig sein und ggf. aus einem preiswerteren, nicht so resistenten Material gefertigt sein.

Dabei ist es zur Aufnahme des auf die Filtersegmente ausgeübten Druckes erstrebenswert, radiale/sternförmige Stützwände 32 in den einzelnen Segmenten vorzusehen, welche eine Verformung der jeweiligen Filtersegmente in Richtung der Filterhauptachse vermeiden, durch welche Undichtigkeiten der Anordnung hervorgerufen werden könnten. Die Anzahl der radialen Stützwände 32 ist nicht sehr kritisch, aus Gründen der erhöhten mechanischen Beanspruchung kann jedoch das Vorsehen von sehr viel mehr Stützwänden, als in Fig. 6 dargestellt, vorteilhaft sein.

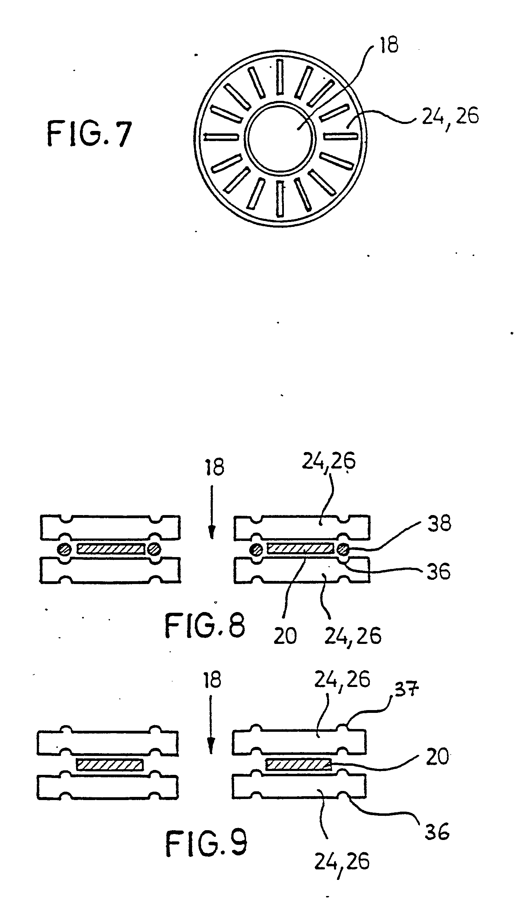

In Fig. 7 ist eine weitere mögliche Ausführung der Öffnungen in den Stirnflächen der Filtersegmente als radiale Schlitze vorgesehen, welche aus Fertigungs- bzw. Material- bzw. Widerstandsgründen erstrebenswert sein kann. Selbstverständlich können auch kreisförmige Öffnungen oder jede anderen geeignete Art von Öffnungen in den Stirnflächen der Filtersegmente vorgesehen sein, wodurch der Größe und Form der Öffnungen lediglich durch die Stabilität der Filterelemente Grenzen gesetzt sind.

Eine Abdichtung des Filtermaterials 2 gegen die Innen- und Außenleitung ist notwendig. Dabei ist in Fig. 8 eine bevorzugte Ausführungsform dargestellt, bei welcher in beiden Arten Filtersegmenten 24, 26 ringförmige ausgebildet sind, in welche ringartige Abdichtelemente 38 gelegt werden können, zwischen welche sodann das Filtermaterial 2 eingefüllt oder in Blatt-/ oder Scheibenform eingelegt wird. Diese Dichtelement können bspw. aus Teflon, Silikon, Gummi od. dgl. hergestellt sein, je nach Art der zu reinigenden Materialien.

In Fig. 9 ist eine weitere bevorzugte Ausführungsform der Abdichtung gezeigt, wobei die Filtersegmente auf ihrer einen Stirnfläche ringförmige Vertiefungen 36 aufweisen, während die Segmentoberfläche wulstartige Erhöhung 37 aufweist, welche bei Zusammendrücken beider Filtersegmente derart miteinander in Eingriff kommen, daß eine Abdichtung zwischen Vertiefung und Wulst erreicht wird, und daß das zwischen den Filtersegmenten 24, 26 eingebettete Filtermaterial 20 gegen die Innen- und Außenleitung abgedichtet wird.

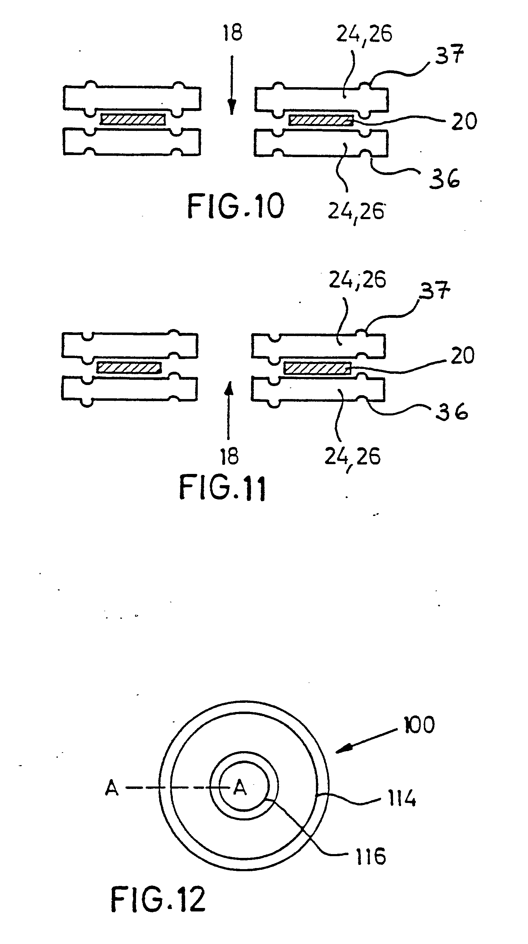

In Fig. 10 ist nun ein Filter dargestellt, in welchem das zu reinigende Material in umgekehrter Form von außen nach innen durch den Filter strömt. Äquivalente Teile sind mit gleichen Bezugszeichen bezeichnet.

Um eine ungefähre Dimensionsvorstellung, welche keinesfalls begrenzend für die Erfindung ausgelegt werden soll, zu geben, bewegen sich die Innendurchmesser der Filterinnenleitung herkömmlicher Kerzenfilter zwischen 3 und 15 cm, während die Länge herkömmlicher Kerzenfilter zwischen 2 und 100 cm variieren kann. Die erfindungsgemäße Ausführungsform ist keinesfalls auf diesem Maßangaben beschränkt.

Ein Beispiel von Filterelementen, wie sie in Fig. 1 dargestellt sind, sind Ölabscheider, Wasserabscheider, Ionenaustauscher und ähnliches.

Die in Fig. 10 dargestellte Ausführungsform eignet sich bspw. für Sterilfilter.

In den Fig. 12 bis 20 sind desweiteren unterschiedliche Ausführungsformen eines Membranelementes bzw. eines Filtermaterialpaketes dargestellt.

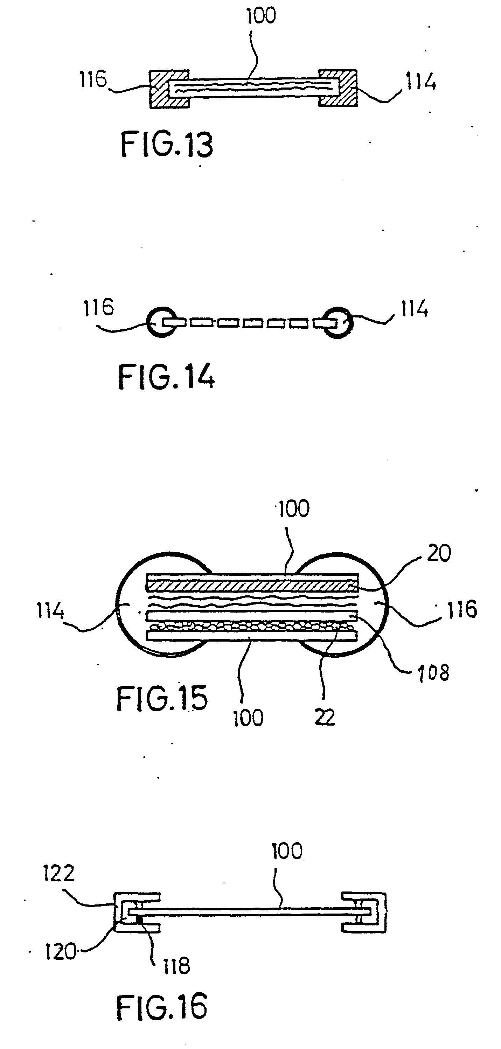

Wie in Fig. 12 dargestellt, ist zur Abdichtung eines Membranelementes bzw. einer Filtermaterialscheibe auf dem Randbereich einer kreisförmigen Filtermaterialscheibe eine abdichtende Einfassung aufgebracht, welche wie in den Fig. 13 oder 14 dargestellt, aus einem anderen Material als das Filtermaterialblatt, bevorzugt einem elastischem Material, wie Gummi, Kunststoff oder ähnlichem bestehen kann. Durch Aufbringen von Druck senkrecht zur Haupterstreckungsrichtung des Filtermaterials wird sodann durch Zusammendrücken des Materials eine Abdichtung erzielt.

Falls nun plane Flächen als Abdichtflächen zur Flächendichtung zur Verfügung stehen, kann wie in Fig. 13 dargestellt, eine rechteck- bzw. quaderförmige Ausgestaltung der Abdichteinfassungen 114 bzw. 116 vorteilhaft sein.

Es kann jedoch auch aus gußtechnischen Gründen erwünscht sein, für derartige Einfassungen 116, 114 wie in Fig. 14 am Beispiel eines Oberflächenfilers, das hier als Sieb dargestellt ist, verdeutlicht, einen runden, elliptischen oder kreisförmigen Querschnitt der Einfassung zu wählen.

In Fig. 15 ist eine Ausführungsform dargestellt, bei welcher verschiedene Schichten durch dazwischenliegendes Stützgewebe verstärkt und sodann durch aufpolymerisierte Einfassungen fixiert werden. Dabei wechseln Stützgewebeschichten 108 mit Filtervlies 20 und Filterharz 22 ab.

Für besonders hohe Drücke kann es, wie in Fig. 16 dargestellt, nützlich sein, wenn ein aus reißfestem Material bestehendes Filtermaterialblatt durch bekannte mechanische Fixierungseinrichtungen befestigt wird. In diesem Falle wurden Schrauben 118 durch das Filtermaterialblatt 100 und ein Metalleinfassungsteil 120 zur Befestigung des Filtermaterialblattes eingesetzt, wobei eine weitere elastische Schicht 122 den festen Metallkern umgibt, um eine bessere Abdichtung zu gewährleisten. Durch eine derartige Fixierung des Filtermaterialblattes wird ein Durchschlagen des Filters vermieden und eine verbesserte Befestiung desselben ermöglicht.

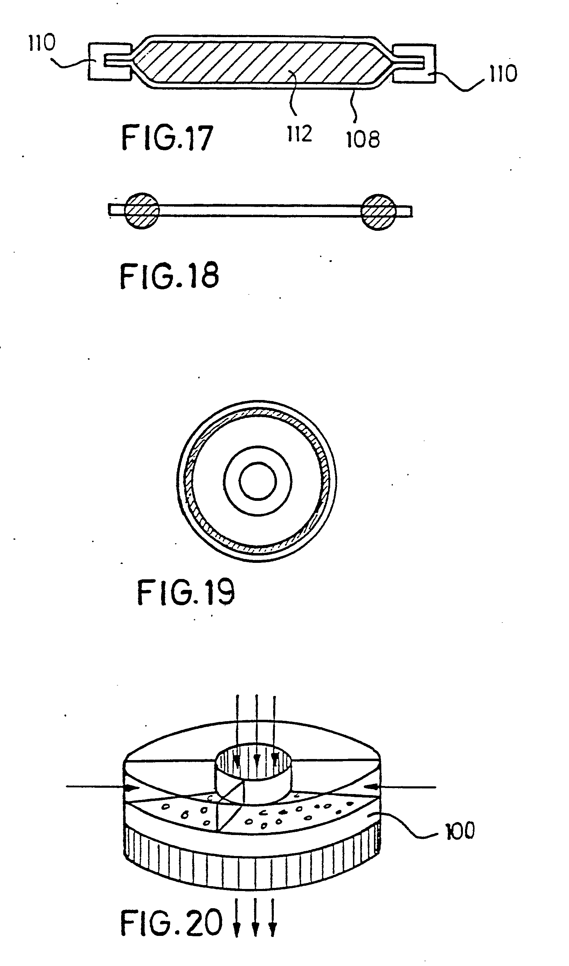

In Fig. 17 ist nun eine weitere bevorzugte Ausführungsform des erfindungsgemäßen Filtermaterialpaketes dargestellt, bei welcher ein lockeres, oben und unten mit Stützgewebe versehenes Filtermaterial durch zwei Abdeckkappen 110 über eine Klemmwirkung gehalten ist.

Aus den Fig. 18 und 19 sind weitere Ausführungsformen eines erfindungsgemäßen Filtermaterials ersichtlich, bei welchen die Einfassungen mit Abstand vom äußersten Rand der Filtermaterialscheiben aufgebracht sind. Diese Wahrung von Abstand kann bspw. notwendig sein, falls durch eine derartige Aufbringung eine bessere Durchdringung des Materials mit dem Dichtmaterial bzw. Einfassungsmaterial möglich ist bzw. eine bessere mechanische Festigkeit der abdichtenden Verbindung, insbesondere gegen Druck, erzielt werden kann.

In Fig. 20 ist nun der Einsatz des erfindungsgemäßen Filtermaterialpaketes in einer Filtervorrichtung gemäß der weiter vorne beschriebenen Art betreffend eine Filtervorrichtung zum Filtern von Gasen und Flüssigkeiten beschrieben. Durch das in Fig. 20 als oberes dargestellte Filtersegment tritt das zu filternde Medium durch offene Seitenwände der Filtersegmentscheibe ein, gelangt durch die Perforation im Segmentboden in das darunterliegenden Filtermaterialpaket 100 und verläßt es gefiltert in ein bauähnliches Filtersegment, welches zur Filterinnenleitung hin offen und zur Filteraußenleitung hin geschlossen ist und ebenfalls Perforationen in seinen beiden Stirnwänden aufweist, zur Filterinnenleitung. Derartige Filteranordnungen können in beliebigen Höhen übereinander gestapelt werden, wobei zum Erzielen einer zufriedenstellenden Filterung die Abdichtung der Filtermaterialpakete gegenüber den Filtersegmenten wesentlich ist.

Es darf noch darauf hingewiesen werden, daß in Fig. 17 mit Bezugszeichen 112 ein Oberflächenfiltrations-Filtermaterialblatt bezeichnet ist.

Bezugszeichenliste

 1 Element oder Segment (Anströmelement, -segment)
 2 Filtermaterial
 3 Ausströmöffnung
 4 Einströmöffnung
 5 Innenwand
 6 Außenwand
 7 Siebkörper
 8 Innenring
 9 Außenring
10 Filtervorrichtung
12 Zuführleitung
14 Abführleitung
16 Reinmedienraum, Außen
18 Innenleitung
20 Filtervlies
22 Filterharz
24 Filtersegment zweiter Art
26 Filtersegment erster Art
28 Abdeckkappe
30 Abdeckkappe
32 radiale/sternförmige Stützwände
34 Stirnfläche
36 ringförmige Vertiefung
37 ringförmiger Wulst, Ringwulst
38 Abdichtelement
51 oberer, umlaufender Absatz
52 unterer, umlaufender Absatz

53 Dichtfläche
54 Dichtfläche
55 Kontaktfläche
56 äußerer umlaufender Dichtwulst
57 innerer umlaufender Dichtwulst
100 Filtermaterialblatt
108 Stützgewebeschicht
110 Abdeckkappe
112 Oberflächenfiltrations-Filterelement
114 Abdichteinfassung
116 Abdichteinfassung
118 Schrauben
120 Metalleinfassungsteil
122 elastische Schicht

## Patentansprüche

1. Filtervorrichtung (10) mit aufgereihten, im wesentlichen zylinderförmigen, radial abwechselnd von außen oder innen anströmbaren Elementen (1) und zwischen jeweils zwei dieser Elemente angeordnetem ringförmigem Filtermaterial (2), dadurch gekennzeichnet, daß die Elemente (1) im wesentlichen hohlzylinderförmig sind, zwei radial voneinander distanzierte Wände (5, 6), sowie eine obere bzw. eine untere Stirnfläche (34) aufweisen, und an ihren Stirnflächen (34) und entweder an ihrer radialen Außenwand (6) oder Innenwand (5) Öffnungen (3, 4) aufweisen, wobei eine Flüssigkeitsleitung von der axialen Innenleitung (18) des Filters durch Öffnungen (4) in der Innenwand (5) der radial von innen anströmbaren hohlzylinderförmigen Elemente (1) und durch die stirnseitigen Öffnungen dieser Elemente (1) durch das ringförmige Filtermaterial (2) und durch die stirnseitigen Öffnungen in das nächste, von außen anströmbare hohlzylinderförmige Element (1), über/in dessen Außenwand (6) angeordnete Öffnungen (3) nach Außen (16) und in Strömungsumkehr eine Flüssigkeitleitung von Außen (16) zur Innenleitung (18) herstellbar ist.

2. Filtervorrichtung nach Anspruch 1, dadurch gekennzeichnet, daß in Strömungsrichtung dem Filtermaterial (2) zumindest ein Siebkörper (7) vor- oder nachgeschaltet ist.

3. Filtervorrichtung nach einem der vorangehenden Ansprüche, dadurch gekennzeichnet, daß das zylinderförmige Element (1) mehrteilig aufgebaut ist, zumindest aus einem Innen- und einem Außenring (8, 9) sowie gegebenenfalls einem oder mehreren Siebkörpern (7).

4. Filtervorrichtung nach Anspruch 3, dadurch gekennzeichnet, daß zumindest ein Siebkörper (7) in den Außenring (9) und/oder den Innenring (8) einrastbar ist.

5. Filtervorrichtung nach einem der Ansprüche 3 und 4, dadurch gekennzeichnet, daß das Filtermaterial (2) mit Abstand zum Siebkörper (7) angeordnet ist.

6. Filtervorrichtung nach einem der vorangehenden Ansprüche, dadurch gekennzeichnet, daß mindestens ein hohlzylinderförmiges Element (1), bevorzugt ein Endelement (1) über einen Gummiwulst/O-Ring am nachfolgenden Element (1) abgestützt ist.

7. Filtervorrichtung nach Anspruch 6, dadurch gekennzeichnet, daß das Element (1) mit einem Innen- und einem Außenring, (8, 9) am Innen- und/oder Außenring (8, 9) einen Gummiwulst/O-Ring aufweist.

8. Filtervorrichtung nach einem der vorangehenden Ansprüche, dadurch gekennzeichnet, daß das ringförmige Filtermaterial (2) eine PTFE-Membran, die gegebenenfalls zwei- oder mehrschichtig sein kann, aufweist.

9. Filtervorrichtung nach einem der Ansprüche 1 bis 8, dadurch gekennzeichnet, daß die axiale Innenleitung (18) als ein Öffnungen aufweisender Zuganker, auf welchen die hohlzylinderförmigen Elemente (24, 26) und ringförmiges Filtermaterial (2) durch Halteelemente befestigt sind, ausgebildet ist.

10. Filtervorrichtung nach Anspruch 9, dadurch gekennzeichnet, daß die zylinderförmigen Elemente (24, 26) radial zur Achse der Innenleitung (18) und senkrecht zu den Stirnflächen (34) der Elemente (1) verlaufende Stützwände (32) aufweisen.

11. Filtervorrichtung nach einem der Ansprüche 9 oder 10, dadurch gekennzeichnet, daß die Öffnungen in einer oder beiden Stirnflächen (34) der hohlzylinderförmigen Elemente (1) lochartig und/oder schlitzförmig und/oder siebartig sind.

12. Filtervorrichtung nach einem der Ansprüche 7 bis 11, dadurch gekennzeichnet, daß die Elemente (24, 26) jeweils zwei parallel zur Elementaußenwand (27) und der Elementinnenwand (29) verlaufende Ringwulste (37) auf ihrer/n Stirnfläche/n (34) aufweisen.

13. Filtervorrichtung nach einem der Ansprüche 7 bis 12, dadurch gekennzeichnet, daß die Elemente (24, 26) zwei parallel zur Außenwand (27) und Innenwand verlaufende ringförmige Vertiefungen (36) auf der/n Stirnseite/n (34) aufweisen, die zum abdichtenden Eingriff mit der Ringwulst (37) eines benachbarten hohlzylinderförmigen Elementes (1) ausgebildet sind.

14. Filtervorrichtung nach irgendeinem der vorangehenden Ansprüche, dadurch gekennzeichnet, daß das ringförmige Filtermaterial (2) ein nicht wiederverwendbares Material, wie Papier, Cellulose, Filz, Leder, Asbest, Sägemehl, Bimstein, Titandioxid ist.

15. Filtervorrichtung nach einem der vorangehenden Ansprüche, dadurch gekennzeichnet, daß das ringförmige Filtermaterial (2) regenerierbar ist, wie Glas, Teflon Warenzeichen, Porzellan, Kunstharz-Ionenaustauscher, Metall.

**Claims**

1. Filtering device (10), with elements (1) placed in series, essentially cylinder-shaped and radially alternately advanceable from the outside or the inside, and with circular filtering material (2) disposed between two each of these elements, characterised in that the elements (1) are essentially hollow cylinder-shaped, providing two walls (5, 6) which are radially a distance apart, and including an upper and a lower end surface (34) respectively and having openings (3, 4) at the end surfaces (34) and either at its radial outer wall (6) or its inner wall whereby a liquid duct of the axial inner channel (18) of the filter can be created by way of openings (4) in the inner wall (5) of the hollow cylinder-shaped elements (1) which are advanceable radially from the inside and by openings at the end surface of these elements (1), by circular filtering material (2) and by openings at the end surface into the next, externally advanceable hollow cylinder-shaped element (1), via/into openings (3) located in its outer wall (6) to the outside (16) and in flow reversal a liquid duct from the outside (16) to the inner channel (18).

2. Filtering device according to claim 1, characterised in that at least one filtering body (7) is connected to the filtering material (2) at the inlet side or the outlet side in the flow direction.

3. Filtering device according to one of the previous claims, characterised in that the cylinder-shaped element (1) is of a composite structure, including at least one inner and one outer ring (8, 9) as well as one or several filtering bodies (7) if required.

4. Filtering device according to claim 3, characterised in that at least one filtering body (7) is engaged in the outer ring (9) and/or the inner ring (8).

5. Filtering device according to one of the claims 3 and 4, characterised in that the filtering material (2) is disposed at a distance from the filtering body.

6. Filtering device according to one of the previous claims, characterised in that at least one hollow cylinder-shaped element (1), preferably an end element (1), is supported via a rubber rim/O-ring by the following element (1).

7. Filtering device according to claim 6, characterised in that the element (1) including an inner and an outer ring (8, 9) has a rubber rim/O-ring at the inner and/or outer ring (8, 9).

8. Filtering device according to one of the previous claims, characterised in that the circular filter material (2) has a PTFE membrane which, if required, can be twin- or multilayered.

9. Filtering device according to one of the claims 1 to 8, characterised in that the axial inner duct (18) is constructed as a bar with openings, onto which bar are attached by way of fixing elements the hollow cylinder-shaped elements (24, 26) and the circular filtering material (2).

10. Filtering device according to claim 9, characterised in that the cylinder-shaped elements (24, 26) have supporting walls (32) disposed radially to the axis of the inner duct (18) and vertically to the end surfaces (34) of the elements (1).

11. Filtering device according to one of the claims 9 or 10, characterised in that the opening in one or both end surfaces (34) of the hollow cylinder-shaped elements (1) are perforated and/or slotted and/or sievelike.

12. Filtering device according to one of the claims 7 to 11, characterised in that the elements (24, 26) have each two circular rims (37) at the end surface(s) (34) displaced parallel to the element outer wall (27) and the element inner wall (29).

13. Filtering device according to one of the claims 7 to 12, characterised in that the elements (24, 26) have two circular recesses (36) at their end surface(s) (34) which are disposed parallel to the outer wall (27) and the inner wall, which recesses sealingly engage with the circular rim (37) of an adjacent hollow cylinder-shaped element (1).

14. Filtering device according to any one of the previous claims, characterised in that the circular filter material (2) is of not re-usable material such as paper, cellulose, felt, leather, asbestos, saw dust, pumice stone, titanium dioxyde.

15. Filtering device according to one of the previous claims, characterised in that the circular filter material (2) can be regenerated, such as glass, teflon (trade mark), porcelain, synthetic resin ion-exchanger, metal.

## Revendications

1. Dispositif filtrant (10) avec des éléments (1) superposés de forme essentiellement cylindrique pouvant venir au contact du liquide radialement, alternativement depuis l'extérieur ou depuis l'intérieur et avec un matériau filtrant annulaire (2) disposé chaque fois entre deux de ces éléments, caractérisé en ce que les éléments (1) présentent essentiellement la forme d'un cylindre creux, qu'ils présentent deux parois (5, 6) à distance l'une de l'autre ainsi qu'une surface frontale supérieure et une surface frontale inférieure (34) et des orifices (3, 4) sur leur surface frontale (34) et, soit sur leur paroi extérieure radiale (6), soit sur leur paroi intérieure (5), tandis qu'un passage du liquide depuis le passage intérieur axial (18) du filtre est réalisable à travers des orifices (4) dans la paroi intérieure (5) des éléments (1) en forme de cylindre creux pouvant venir radialement en contact avec le liquide par l'intérieur et par les orifices frontaux de ces éléments (1) à travers le matériau filtrant (2) annulaire et à travers les orifices frontaux dans l'élément (1) en forme de cylindre creux voisin pouvant venir au contact du liquide par l'extérieur en passant par les orifices (3) disposés sur ou dans sa paroi extérieure (6) vers l'extérieur (16) et, quand on inverse le sens de l'écoulement, un passage du liquide peut être réalisé de l'extérieur (16) vers le passage intérieur (18).

2. Dispositif filtrant selon la revendication 1, caractérisé en ce qu'au moins un élément à tamis (7) est monté avant ou après le matériau filtrant (2) en direction de l'écoulement.

3. Dispositif filtrant selon l'une des revendications précédentes, caractérisé en ce que l'élément cylindrique (1) est constitué de plusieurs pièces et comporte au moins une bague intérieure et une bague extérieure (8, 9) ainsi que, éventuellement, un ou plusieurs éléments à tamis (7).

4. Dispositif filtrant selon la revendication 3, caractérisé en ce qu'au moins un élément à tamis (7) peut venir s'emboîter dans la bague extérieure (9) et/ou dans la bague intérieure (8).

5. Dispositif filtrant selon l'une des revendications 3 et 4, caractérisé en ce que le matériau filtrant (2) est disposé à une certaine distance par rapport à l'élément à tamis (7).

6. Dispositif filtrant selon l'une des revendications précédentes, caractérisé en ce qu'au moins un élément (1) en forme de cylindre creux et, de préférence, un élément terminal (1) prend appui sur l'élément (1) suivant par l'intermédiaire d'un bourrelet en caoutchouc ou d'un joint torique.

7. Dispositif filtrant selon la revendication 6, caractérisé en ce que l'élément (1), avec une bague intérieure et une bague extérieure (8, 9), présente sur la bague intérieure et/ou la bague extérieure (8, 9) un bourrelet en caoutchouc ou un joint torique.

8. Dispositif filtrant selon l'une des revendications précédentes, caractérisé en ce que le matériau filtrant annulaire (2) présente une membrane en PTFE qui peut éventuellement être à deux ou plusieurs couches.

9. Dispositif filtrant selon l'une des revendications 1 à 8, caractérisé en ce que le passage intérieur axial (18) est constitué par un tirant présentant des orifices sur lesquels les éléments (24, 26) en forme de cylindres creux et le matériau filtrant (2) en forme d'anneau sont fixés par des éléments de fixation.

10. Dispositif filtrant selon la revendication 9, caractérisé en ce que les éléments cylindriques (24, 26) présentent des parois de support disposées radialement par rapport à l'axe du passage intérieur (18) et perpendiculairement aux surfaces frontales (34) des éléments (1).

11. Dispositif filtrant selon l'une des revendications 9 ou 10, caractérisé en ce que les orifices dans l'une ou les deux surface(s) frontale(s) (34) des éléments (1) en forme de cylindre creux sont en forme de trous et/ou de fentes et/ou de tamis.

12. Dispositif filtrant selon l'une des revendications 7 à 11, caractérisé en ce que les éléments (24, 26) présentent chaque fois deux bourrelets annulaires (37) sur leur(s) surface(s) frontale(s) (34) disposée(s) parallèlement à la paroi extérieure des éléments (27) et à la paroi intérieure des éléments (29).

13. Dispositif filtrant selon l'une des revendications 7 à 12, caractérisé en ce que les éléments (24, 26) présentent deux renfoncements annulaires (36) sur leur(s) surface(s) frontale(s) (34) parallèle(s) à la paroi extérieure (27) et à la paroi intérieure, qui sont disposés pour assurer l'étanchéité par contact avec le bourrelet annulaire (37) d'un élément (1) voisin en forme de cylindre creux.

14. Dispositif filtrant selon l'une quelconque des revendications précédentes, caractérisé en ce que le matériau filtrant (2) annulaire est un matériau non réutilisable tel que papier, cellulose, feutre, cuir, amiante, sciure, pierre ponce, dioxyde de titane.

15. Dispositif filtrant selon l'une des revendications précédentes, caractérisé en ce que le matériau filtrant annulaire (2) peut être régénéré et est constitué de verre, de Téflon, de porcelaine, de terre cuite, d'un échangeur d'ions en résine synthétique ou de métal.

FIG.1

FIG.2

EP 0 152 903 B1

56 57

2

FIG.3

FIG.4

FIG.5

FIG.6

FIG.7

18

24, 26

18

24,26

38

36

20    24,26

FIG.8

18

24,26

37

20

36

24,26

FIG.9

FIG.10

FIG.11

FIG.12

FIG.13

FIG.14

FIG.15

FIG.16

FIG.17

FIG.18

FIG.19

FIG.20